# EUROPEAN PATENT SPECIFICATION

(11) **EP 1 133 102 B1**
(45) Date of publication and mention of the grant of the patent: **30.07.2003**
(21) Application number: 00127965.2
(22) Date of filing: 20.12.2000
(51) Int. Cl.: H04L 12/24

(54) **An interface to a network management system of a communication network**
Schnittstelle zu einem Netzwerkverwaltungssystem eines Kommunikationsnetzes
Une interface pour un système de gestion de réseau d'un réseau de communication

(43) Date of publication of application: 12.09.2001
(73) Proprietor: Agilent Technologies, Inc. (a Delaware corporation), Palo Alto, CA 94303 (US)
(72) Inventor: Sarraf, Alain, 71083 Herrenberg (DE); Nassal, Uwe, 75177 Pforzheim (DE)
(74) Representative: Barth, Daniel

(56) References cited:
- EP-A- 0 963 077
- US-A- 6 058 103
- CANELA Z ET AL: "INTEGRATING WEB-BASED USER INTERFACES IN TMN SYSTEMS" IEEE NETWORK OPERATIONS AND MANAGEMENT SYMPOSIUM,US,NEW YORK, NY: IEEE, vol. CONF. 10, 3 November 1997 (1997-11-03), pages 110-129, XP000799766 ISBN: 0-7803-4352-2
- MICHEL T ET AL: "COLLABORATIVE NETWORK MANAGEMENT" BOSTON, MA, OCT. 19 - 21, 1998,NEW YORK, NY: IEEE,US, 19 October 1998 (1998-10-19), pages 599-603, XP000830601 ISBN: 0-7803-4507-X

## Description

### BACKGROUND OF THE INVENTION

The invention relates to a network management system for a communication network and in particular to an interface to a network management system.

Network management systems are known on the market and are used e.g. for planning and documenting a communication network. These systems generally store information about all objects operating in the communication network. These objects are generally stored in a database on a server. The information stored in the network management system can be accessed via a client program which is located on a remote computer i.e. on a client.

In order to communicate between the server and the client, the Common Object Request Broker Architecture (CORBA) can be used. Thus, the programming languages and operating systems of the server programs are independent of the client programs.

CORBA enables the definition of interfaces which can be viewed as representations for the objects which are stored on the server. Each of the interfaces is comprised of attributes and operations which reflect the nature of the objects they represent. The interfaces may be used e.g. to activate a specific device of the communication network wherein the device is defined by the attributes of the interface.

By definition, the object which implements the CORBA interface on the server side is created and executed on the server side. That is, all accesses to this object are performed over a network connection of the communication network.

In the communication network, it is often necessary that the client of the network management system requires access to a large number of objects at the same time. For example, the client requires data about all devices which are currently in a critical state. Such a request makes it necessary that an object which implements the interface be created on the server for each and every relevant device. This requires a large amount of memory space on the network management system's server. In addition, the client must access these objects on the server individually over a network connection. The data transmission is in this case slow and cumbersome.

MICHEL et al: "COLLABORATIVE NETWORK MANAGEMENT", Boston, MA, Oct. 19-21, 1998; New York, NY: IEEE, US, 19 October 1998 (1998-10-19), pages 599-603, XP000830601 ISBN: 0-7803-4507-X, discloses a collaborative network management where information is shared among network management systems, so that they collaborate in process of planning and trouble shooting. Open public interfaces and protocols standards such as SNMP and CORBA are applied for building the sharing mechanism.

### OBJECT AND ADVANTAGES OF THE INVENTION

It is therefore an object of the invention to provide an improved network management system and in particular an improved interface to the network management system. Preferably, this should require less memory space on the server and/or lead to more efficient transmissions between the client and the server.

This object is solved by the method of claim 1. As well, the object is solved by the communication network of claim 7, the network management system of claim 8 and the interface of claim 9.

The invention uses a struct construct which only includes at least one attribute but no operations. The invention therefore separates the attributes and the operation of the known interface and creates a struct which only includes attributes, but no operations. The interface according to the invention therefore comprises the definition of a struct which only includes at least one attribute but no operation.

This leads to the advantage that, in case that the client of the network management system needs access to a number of objects at the same time, it is not necessary to create an interface implementation object for each and every required object on the server. For the client which requires only attribute information, it is sufficient to access a descriptor represented by the struct. A factory on the server is used to access these structs. The factory creates a list of all required structs based on the client's requirements. For example, the client may request the factory to return structs for all network elements which are in a particular state. This list is then sent from the server to the client of the network management system. That is, the data is transferred to the client so that the client may then process the data without any further access to the server. The factory allows the client to create implementation objects, i.e. objects that support operations and implement a given interface, when necessary but does not require the creation of such objects for all client requests.

The memory space needed on the server is therefore minimized with the help of the invention. No large number of objects which implement the interface have to be stored on the server.

As well, the transmission between the client and the server is optimized. The list of structs is sent from the server to the client in only one operation. This is much more effective than accessing a number of implementation objects on the server separately from the client.

In an embodiment of the invention according to the dependant claims, an interface may be used which includes at least one operation and zero or more attributes. Preferably, this interface includes a reference to the above mentioned struct.

This interface opens the possibility to use the struct to access the same attribute information as that which is defined in a known interface. By referencing the struct, the interface according to the invention has the same data as the known interface.

Further embodiments of the invention are provided in the dependant claims. In particular, it is emphasized that the invention may also be realized by a computer program or a computer program product which are able to execute the method of claim 1 when run on a data processing system.

### DETAILED DESCRIPTION OF AN EMBODIMENT OF THE INVENTION

In a communication network of e.g. a company, a large number of objects needs to be managed. These objects may be, for example, buildings, floors and rooms for which the network to be managed is intended. Further objects may be cables, telephones, facsimiles and other devices used to build up the network. All these objects are stored in a database and are managed by a network management system.

The network management system is provided for planning and implementing the communication network. As well, any change to the network, e.g. if a participant of the network moves from one room to another, is supported by the network management system. Another property of the network management system is the ability to respond to queries, e.g. to provide a list of all cordless telephones in a specific building. These queries are generally sent to the network management system via a client program. For these purposes, the client of the network management system has to access the objects in the database.

The database, the network management system, and the network management system's client are parts of a distributed system in which the database is part of a server and the client executes independently. The server programs and the client programs are executed in independent address spaces and are possibly located on separate computer systems.

In order to communicate between the server and the client, the Common Object Request Broker Architecture (CORBA) is used which comprises an Interface Description Language (IDL). Using CORBA IDL, the server and the client can communicate independent of e.g. the programming languages which are used within the server programs or the client programs.

In CORBA IDL, an object of the communication network as mentioned above can be described as follows:
interface NetworkObject {
   attribute long object_id;
   attribute string object_name;
   attribute string manufacturer;
   attribute string product_number;
   void activate ();
      };

This definition has the name "NetworkObject" and represents a so-called interface. It has the purpose to activate a specific device of the communication network which is defined e.g. by the "manufacturer" and the "product_number". The interface comprises a number of attributes, e.g. "manufacturer", and an operation, e.g. "activate", in one and the same definition.

In order to create an object which implements the interface as described above, a client could use the following definition:
interface NetworkFactory {
   NetworkObject getObject(in long object_id);
   };

This definition has the name "NetworkFactory" and is able to create new objects on demand that may then be used to carry out desired tasks, e.g. the activation of a device. The objects which the NetworkFactory creates when a client invokes the "getObject" operation conform to the NetworkObject-interface previously described.

All interfaces as mentioned above are stored on the server. The client is able to access these interfaces by sending a respective instruction to the server. For example, if the client sends the instruction "getObject" to the NetworkFactory residing on the server, the server will create the corresponding object that conforms to the NetworkObject-interface. If the client then sends the instruction "activate" to the NetworkObject which now resides on the server, the NetworkObject will activate the specific device which is represented by the created object. The device activation is performed by the created object in accordance to the specified CORBA IDL interface.

The following new CORBA IDL definitions are added to the network management system's set of definitions:
struct NetworkObjectDescriptor {
   long object_id;
   string object_name;
   string manufacturer;
   string product_number;
   };
interface NetworkObject {
   (NetworkObjectDescriptor getAttributes();
   void activate();
      };
interface NetworkFactory {
   NetworkObjectDescriptor D getAll();
   NetworkObject getlnstance(in long object_id);
      };

In these new definitions, the attributes are separated from the operations. This means that in one and the same definition only attributes or only operations are comprised. The NetworkObjectDescriptor cannot contain operations by definition and only holds the attribute values. Conversely, the NetworkObject has no attributes but supports the operations, e.g. activate (). The NetworkObject may or may not also contain attributes but this is not required.

The separation of the attributes and the operations is realized by a so-called struct construct The struct for the "NetworkObjectDescriptor" is a descriptor for a corresponding interface with the name "NetworkObject". The struct only comprises the attributes of the NetworkObject, but not its operation.

The operation of the NetworkObject i.e. the activate operation is contained in the definition of the "NetworkObject". The attributes are referenced by the client via the NetworkObjectDescriptor which is defined in the described struct descriptor. The attributes are therefore accessible via the NetworkObjectDescriptor without the need for a NetworkObject.

An object that implements the NetworkFactory-interface may be used to create the described NetworkObjectDescriptor. For example, with a "getAll()" operation invoked on the NetworkFactory, a list of all of the struct descriptors which correspond to the NetworkObjectDescriptor is created, and all objects of the struct on the server are transferred directly to the client.

As an alternative, it is possible to define other instructions like "getByRegion(in string region_name)" or "getByName(in string name)". These alternatives include restrictions which allow to select specific objects out of all objects stored on the server.

The NetworkFactory-interface provides two functionalities: i) the ability to perform operations by creating an object which implements the NetworkObject-interface, and ii) the ability to access structs of the NetworkObjectDescriptor-type directly thereby bypassing the need to create an object.

The above described objects may be used as follows:

The client sends an instruction "getNetworkFactory" to the server so that the NetworkFactory is created. Then, the client sends the instruction "getAll" to the NetworkFactory which now resides on the server so that a list of all objects on the server is established. Then, the created list of objects is sent by the server to the client.

It is important to notice that the list of objects is not stored on the server after it has been sent to the client.

The client now examines the received list of objects with respect to desired criteria. For example, the client now selects a specific object, e.g. a facsimile device that is located in the first floor of a specific building of the communication network.

Then, the client sends the instruction "getlnstance" to the NetworkFactory on the server which relates to the selected specific device. The server now creates an object which implements the NetworkObject-interface for the specific device and sends a confirmation to the client so that the client is able to access the created object. The client then sends the instruction "activate" to the newly created NetworkObject on the server so that the server actually performs the activation of the specific device.

It is important to notice that the server only creates an object that implements the NetworkObject-interface for the specific device that was defined by the client in the "getlnstance" call to the NetworkFactory. The server does not create implementation objects for all objects that are included in the list that was returned from the "getAll" call to the NetworkFactory.

As an advantage, the server does not require memory space for storing such implementation objects of the NetworkObject-interface for all objects of the list Instead, only that specific NetworkObject-object is created and stored by the server which is selected by the client out of the list of the NetworkObjectDescriptor structs.

As a further advantage, the list of objects which is created by the server is sent in only one operation to the client so that the transmission of the list is faster compared to a transmission in a number of different operations belonging to different objects which implement the NetworkObject-interface.

## Claims

1. A method of operating a communication network with a network management system, wherein:
• said communication network comprises a number of objects,
• the network management system comprises a server and a client,
• data describing the objects is stored in a database on the server, and
• the client is adapted to access the server of said network management system
said method comprising the transmission of data between the server and the client under the use of the Common Object Request Broker Architecture (CORBA) for operating the communication network, and further comprising the steps of:
• accessing - by the client - a number of descriptors for objects that are stored in the database, each descriptor being represented by a struct which only includes at least one attribute but no operation,
• creating - on the server - a list of all required structs based on the client's requirements,
• sending the list from the server to the client,
• processing - by the client - the data represented by the list of structs.

2. The method of claim 1 comprising the further step of performing operations for processing the data by using a definition for an interface that enables the creation of a data object on the server whose interface includes one or more operations but not necessarily any attribute data.

3. The method of claim 2 comprising the further step of creating implementation objects that support operations and implement a given interface, for one or more of the objects represented by the list of structs.

4. The method of claim 1 comprising the further step that an instruction from the client which is directed to the struct on the server, results in sending data from the server to the client.

5. The method of claim 4 comprising the further step of not storing the data sent to the client on the server.

6. A computer program or a computer program stored on a data carrier, comprising program steps for executing all the method steps of claim 1 when run on a data processing system such as a computer system comprising a server and a client.

7. A communication network with a network management system, wherein:
• said communication network comprises a number of objects,
• the network management system comprises a server and a client,
• the server comprises a database for storing data describing the objects,
• the client is adapted to access the server of said network management system
• said communication network is adapted to transmit data between the server and the client under the use of the Common Object Request Broker Architecture (CORBA) for operating the communication network,
• the client is adapted for accessing a number of descriptors for objects that are stored in the database, each descriptor being represented by a struct which only includes at least one attribute but no operation,
• the server is adapted for creating a list of all required structs based on the client's requirements and sending the list to the client, and
• the client is adapted for processing the data represented by the list of structs.

8. A network management system adapted for operating a communication network, wherein:
• said communication network comprises a number of objects,
• the network management system comprises a server and a client,
• the server comprises a database for storing data describing the objects,
• the client is adapted to access the server of said network management system , and wherein said server and client are adapted to transmit data to each other via said communication network under the use of the Common Object Request Broker Architecture (CORBA), for operating the communication network,
• the client is adapted for accessing a number of descriptors for objects that are stored in the database, each descriptor being represented by a struct which only includes at least one attribute but no operation,
• the server is adapted for creating a list of all required structs based on the client's requirements and sending the list to the client, and
• the client is adapted for processing the data represented by the list of structs.

9. An interface of a network management system for a communication network, wherein:
• said communication network comprises a number of objects,
• the network management system comprises a server and a client,
• data describing the objects is stored in a database on a server,
• the client is adapted to access the server of said network management system,
• said communication network is adapted to transmit data between the server and the client under the use of the Common Object Request Broker Architecture (CORBA) for operating the communication network, the interface being a data representation of an object stored on the server, wherein
• the interface comprises a definition for a struct which only includes at least one attribute but no operation.

## Patentansprüche

1. Ein Verfahren zum Bedienen eines Kommunikationsnetzwerks mit einem Netzwerkmanagementsystem, wobei
• dieses Kommunikationsnetzwerk eine Anzahl Objekte aufweist,
• das Netzwerkmanagementsystem einen Server und einen Client aufweist,
• Daten, welche die Objekte beschreiben, auf dem Server der Datenbank gespeichert sind, und
• der Client angepasst ist für Zutritt zum Server dieses Netzwerkmanagementsystems,
dieses Verfahren die Übertragung von Daten zwischen dem Server und dem Client unter Verwendung der Common Object Request Broker Architecture (CORBA) aufweist zum Bedienen des Kommunikationsnetzwerks und zudem die folgenden Schritte aufweist:
• Zugreifen - durch den Client - auf eine Anzahl von Deskriptoren für Objekte, welche in der Datenbank gespeichert sind, wobei jeder Deskriptor dargestellt ist durch eine Struktur, welche nur mindestens eine Eigenschaft einschließt aber keine Operation,
• Erzeugen - auf dem Server - einer Liste aller erforderlichen Strukturen basierend auf den Erfordernissen des Client,
• Senden der Liste vom Server an den Client,
• Verarbeiten - durch den Client - der Daten, welche durch die Liste der Strukturen dargestellt ist.

2. Das Verfahren nach Anspruch 1 mit zusätzlich dem Schritt zum Durchführen von Operationen zum Verarbeiten von Daten durch Verwendung einer Definition für eine Schnittstelle, welche die Schaffung eines Datenobjekts auf dem Server ermöglicht, dessen Schnittstelle eine oder mehrere Operationen einschließt, aber nicht notwendigerweise Eigenschaftsdaten.

3. Das Verfahren nach Anspruch 2 mit zusätzlich dem Schritt zum Erzeugen von lmplementations-Objekten, welche Operationen unterstützen und eine vorgegebene Schnittstelle implementieren für ein oder mehrere der Objekte, welche in der Liste der Strukturen dargestellt ist.

4. Das Verfahren nach Anspruch 1 mit dem zusätzlichen Schritt, dass eine Anweisung von dem Client, gerichtet auf die Struktur auf dem Server, resultiert im Senden von Daten von dem Server an den Client.

5. Das Verfahren nach Anpruch 4 mit dem zusätzlichen Schritt, die an den Client auf dem Server gesendeten Daten nicht zu speichern.

6. Ein Computer oder ein Computerprogramm gespeichert auf einem Datenträger, mit Programmschritten zum Ausführen aller Verfahrensschritte des Anspruchs 1, wenn auf einem Datenverarbeitungssystem wie einem Computersystem mit einem Server und einem Client ausgeführt wird.

7. Ein Kommunikationsnetzwerk mit einem Netzwerkmanagementsystem,
wobei
• dieses Kommunikationsnetzwerk eine Anzahl Objekte aufweist,
• das Netzwerkmanagementsystem einen Server und einen Client aufweist,
• der Server eine Datenbank aufeist zum Speichern von Daten, die die Objekte beschreiben,
• der Client angepasst ist für Zutritt zum Server dieses Netzwerkmanagementsystems,
• dieses Kommunikationsnetzwerk angepasst ist zum Übermitteln von Daten zwischen dem Server und dem Client unter Verwendung der Common Object Request Broker Architecture (CORBA) zum Bedienen des Kommunikationsnetzwerks,
• der Client angepasst ist zum Zugreifen auf eine Anzahl von Deskriptoren für Objekte, welche in der Datenbank gespeichert sind,
wobei jeder Deskriptor dargestellt wird durch eine Struktur, welche nur mindestens eine Eigenschaft aber keine Operation aufweist,
• der Server angepasst ist zum Erzeugen einer Liste aller erforderlichen Strukturen, basierend auf den Erfordernissen des Client, und Senden der Liste an den Client, und
• der Client angepasst ist zum Verarbeiten der Daten, welche auf der Liste der Strukturen dargestellt sind.

8. Ein Netzwerkmanagementsystem, das angepasst ist zum Bedienen eines Kommunikationsnetzwerks, wobei
• dieses Kommunikationsnetzwerk eine Anzahl von Objekten aufweist,
• das Netzwerkmanagementsystem einen Server und einen Client aufweist,
• der Server eine Datenbank aufweist zum Speichern von Daten, die die Objekte beschreiben,
• der Client angepasst ist für Zutritt zum Server dieses Netzwerkmanagementsystems und wobei dieser Server und Client angepasst sind zum Übermitteln von Daten aneinander mit Hilfe dieses Kommunikationsnetzwerks unter Verwendung der Common Object Request Broker Architecture (CORBA) zum Bedienen des Kommunikationsnetzwerks,
• der Client angepasst ist zum Zugreifen auf eine Anzahl von Deskriptoren für Objekte, welche in der Datenbank gespeichert sind, wobei jeder Deskriptor dargestellt ist durch eine Struktur, welche nur mindestens eine Eigenschaft einschließt aber keine Operation,
• der Server angepasst ist zum Erzeugen einer L iste m it a llen erforderlichen Strukturen basierend auf den Erfordernissen des Client und Senden der Liste an den Client, und
• der Client angepasst ist zum Verarbeiten der Daten, die in der Liste der Strukturen dargestellt sind.

9. Eine Schnittstelle eines Netzwerkmanagementsystems für ein Kommunikationsnetzwerk, wobei
• dieses Kommunikationsnetzwerk eine Anzahl von Objekten aufweist,
• das Netzwerkmanagementsystem einen Server und einen Client aufweist,
• Daten, welche die Objekte beschreiben, in einer Datenbank auf dem Server gespeichert sind,
• der Client angepasst ist für Zutritt zum Server dieses Netzwerkmanagementsystems,
• dieses Kommunikationsnetzwerk angepasst ist zum Übermitteln von Daten zwischen dem Server und dem Client unter Verwendung der Common Object Request Broker Architecture (CORBA) zum Bedienen des Kommunikationsnetzwerks,
• die S chnittstelle e ine D atendarstellung e ines a uf d em S erver gespeicherten Objekts ist, wobei die Schnittstelle eine Definition aufweist für eine Struktur, welche nur mindestens eine Eigenschaft aufweist, aber keine Operation.

## Revendications

1. Méthode d'exploitation d'un réseau de communication à l'aide d'un système de gestion de réseau, où :
• ledit réseau de communication comprend plusieurs objets,
• le système de gestion de réseau comprend un serveur et un client,
• les données décrivant les objets sont stockées dans une base de données sur le serveur, et
• le client est adapté pour accéder au serveur dudit système de gestion de réseau,
ladite méthode comprenant la transmission de données entre le serveur et le client dans le cadre du standard CORBA (Common Object Request Broker Architecture) pour l'exploitation du réseau de communication, et comprenant en outre les étapes :
• d'accès - par le client - à plusieurs descripteurs pour les objets qui sont stockés dans la base de données, chaque descripteur étant représenté par une structure qui inclut uniquement au moins un attribut, mais pas d'opération,
• de création - sur le serveur - d'une liste de toutes les structures requises sur la base des exigences du client,
• d'envoi de la liste du serveur vers le client,
• du traitement - par le client - des données représentées par la liste de structures.

2. Méthode selon la revendication 1 comprenant l'étape supplémentaire d'exécution des opérations pour le traitement des données à l'aide d'une définition d'une interface qui permet la création d'un objet de données sur le serveur dont l'interface inclut une ou plusieurs opérations, mais pas nécessairement des données d'attribut.

3. Méthode selon la revendication 2 comprenant l'étape supplémentaire de création d'objets d'implémentation qui supportent les opérations et implémentent une interface donnée, pour un ou plusieurs objets représentés par la liste de structures.

4. Méthode selon la revendication 1 comprenant l'étape supplémentaire dans laquelle une instruction du client est transmise à la structure sur le serveur, ayant pour résultat l'envoi des données du serveur au client.

5. Méthode selon la revendication 4 comprenant l'étape supplémentaire de non-stockage des données envoyées au client sur le serveur.

6. Programme informatique ou programme informatique stocké sur un support de données, comprenant des étapes de programme pour l'exécution de toutes les étapes de la méthode selon la revendication 1 lors de l'exécution sur un système de traitement de données tel qu'un système informatique comprenant un serveur et un client.

7. Réseau de communication avec un système de gestion de réseau, où :
• ledit réseau de communication comprend plusieurs objets,
• le système de gestion de réseau comprend un serveur et un client,
• le serveur comprend une base de données pour le stockage des données décrivant les objets,
• le client est adapté pour accéder au serveur dudit système de gestion de réseau,
• ledit réseau de communication est adapté à la transmission de données entre le serveur et le client dans le cadre du standard CORBA (Common Object Request Broker Architecture) pour l'exploitation du réseau de communication,
• le client est adapté pour l'accès à plusieurs descripteurs pour les objets qui sont stockés dans la base de données, chaque descripteur étant représenté par une structure qui inclut uniquement au moins un attribut, mais pas d'opération,
• le serveur est adapté pour la création d'une liste de toutes les structures requises sur la base des exigences du client et l'envoi de la liste au client, et
• le client est adapté pour le traitement des données représentées par la liste de structures.

8. Système de gestion de réseau adapté pour l'exploitation d'un réseau de communication, où :
• ledit réseau de communication comprend plusieurs objets,
• le système de gestion de réseau comprend un serveur et un client,
• le serveur comprend une base de données pour le stockage des données décrivant les objets,
• le client est adapté à l'accès au serveur dudit système de gestion de réseau, et où lesdits serveur et client sont adaptés à la transmission de données l'un vers l'autre via ledit réseau de communication dans le cadre du standard CORBA (Common Object Request Broker Architecture), pour l'exploitation du réseau de communication,
• le client est adapté pour accéder à plusieurs descripteurs pour les objets qui sont stockés dans la base de données, chaque descripteur étant représenté par une structure qui inclut uniquement au moins un attribut, mais pas d'opération,
• le serveur est adapté pour la création d'une liste de toutes les structures requises sur la base des exigences du client et l'envoi de la liste au client, et
• le client est adapté pour le traitement des données représentées par la liste de structures.

9. Interface d'un système de gestion de réseau pour un réseau de communication, où:
• ledit réseau de communication comprend plusieurs objets,
• le système de gestion de réseau comprend un serveur et un client,
• les données décrivant les objets sont stockées dans une base de données sur un serveur,
• le client est adapté à l'accès au serveur dudit système de gestion de réseau,
• ledit réseau de communication est adapté à la transmission de données entre le serveur et le client dans le cadre du standard CORBA (Common Object Request Broker Architecture) pour l'exploitation du réseau de communication,
• l'interface étant une représentation des données d'un objet stocké sur le serveur, où :
• l'interface comprend une définition d'une structure qui inclut uniquement au moins un attribut, mais pas d'opération.
